(19) Europäisches Patentamt
European Patent Office
Office européen des brevets

(11) EP 3 833 789 B1

(12) **FASCICULE DE BREVET EUROPEEN**

(45) Date de publication et mention de la délivrance du brevet:
**07.12.2022 Bulletin 2022/49**

(21) Numéro de dépôt: **19795256.7**

(22) Date de dépôt: **24.09.2019**

(51) Classification Internationale des Brevets (IPC):
***C22B 3/26*** *(2006.01)* ***C22B 59/00*** *(2006.01)*
***C22B 3/40*** *(2006.01)*

(52) Classification Coopérative des Brevets (CPC):
**C22B 59/00; C22B 3/402; C22B 3/409;** Y02P 10/20

(86) Numéro de dépôt international:
**PCT/FR2019/052238**

(87) Numéro de publication internationale:
**WO 2020/065201 (02.04.2020 Gazette 2020/14)**

(54) **UTILISATION D'UN MÉLANGE SYNERGIQUE D'EXTRACTANTS POUR EXTRAIRE DES TERRES RARES D'UN MILIEU AQUEUX COMPRENANT DE L'ACIDE PHOSPHORIQUE**

VERWENDUNG EINER SYNERGISTISCHEN MISCHUNG VON EXTRAKTIONSMITTELN ZUR EXTRAKTION VON SELTENERDELEMENTEN AUS EINEM PHOSPHORSÄURE ENTHALTENDEN WÄSSRIGEN MEDIUM

USE OF A SYNERGISTIC MIXTURE OF EXTRACTANTS FOR EXTRACTING RARE EARTH ELEMENTS FROM AN AQUEOUS MEDIUM COMPRISING PHOSPHORIC ACID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **26.09.2018 FR 1858788**

(43) Date de publication de la demande:
**16.06.2021 Bulletin 2021/24**

(73) Titulaires:
- **Commissariat à l'énergie atomique et aux énergies alternatives
75015 Paris (FR)**
- **OCP S.A.
Casablanca, 20200 (MA)**

(72) Inventeurs:
- **ANDREIADIS, Eugen
84000 AVIGNON (FR)**
- **DUCHESNE, Marie-Thérèse
84500 BOLLENE (FR)**
- **OUAATTOU, Abla
20200, Casablanca (MA)**
- **MAZOUZ, Hamid
20200, Casablanca (MA)**
- **DHIBA, Driss
20200, Casablanca (MA)**

(74) Mandataire: **Brevalex
95, rue d'Amsterdam
75378 Paris Cedex 8 (FR)**

(56) Documents cités:
**WO-A1-2016/046179**

- **WANG L ET AL: "Recovery of rare earths from wet-process phosphoric acid", HYDROMETALLURGY, ELSEVIER SCIENTIFIC PUBLISHING CY. AMSTERDAM, NL, vol. 101, no. 1-2, 1 février 2010 (2010-02-01), pages 41-47, XP026851820, ISSN: 0304-386X [extrait le 2009-12-01] cité dans la demande**
- **P.K. NAYAK ET AL: "Single-cycle separation of americium (III) from simulated high-level liquid waste using tetra-bis(2-ethylhexyl)diglycolamide and bis(2-ethylhexyl)phosphoric acid solution", JOURNAL OF ENVIRONMENTAL CHEMICAL ENGINEERING, vol. 1, no. 3, 1 septembre 2013 (2013-09-01), pages 559-565, XP055577964, ISSN: 2213-3437, DOI: 10.1016/j.jece.2013.06.023 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- FENG XIE ET AL: "A critical review on solvent extraction of rare earths from aqueous solutions", MINERALS ENGINEERING., vol. 56, 1 février 2014 (2014-02-01), pages 10-28, XP055304805, GB ISSN: 0892-6875, DOI: 10.1016/j.mineng.2013.10.021

## Description

### DOMAINE TECHNIQUE

L'invention se rapporte au domaine de l'extraction et de la récupération des terres rares.

Plus spécifiquement, l'invention se rapporte à l'utilisation d'un mélange d'extractants à effet synergique pour l'extraction d'au moins une terre rare présente dans un milieu aqueux comprenant de l'acide phosphorique telle qu'une solution aqueuse d'acide phosphorique issue de l'attaque d'un minerai de phosphate par l'acide sulfurique.

L'invention trouve notamment application dans le traitement des minerais de phosphates en vue de valoriser les terres rares présentes dans ces minerais.

### ÉTAT DE LA TECHNIQUE ANTÉRIEURE

Les terres rares (ci-après « TR ») regroupent des métaux qui se caractérisent par des propriétés voisines, à savoir le scandium (Sc), l'yttrium (Y) ainsi que l'ensemble des lanthanides, ces derniers correspondant aux 15 éléments chimiques répertoriés dans le tableau périodique des éléments de Mendeleïev allant du numéro atomique 57 pour le lanthane (La) au numéro atomique 71 pour le lutécium (Lu).

Dans ce groupe, on distingue les TR « légères », c'est-à-dire de numéro atomique au plus égal à 61 (scandium, yttrium, lanthane, cérium, praséodyme et néodyme), et les TR « lourdes », c'est-à-dire de numéro atomique au moins égal à 62 (samarium, europium, gadolinium, terbium, dysprosium, holmium, erbium, thulium et ytterbium).

La configuration électronique particulière des TR et, notamment, leur sous-couche électronique 4f non saturée, leur confère des propriétés chimiques, structurales et physiques uniques. Ces propriétés sont mises à profit dans des applications industrielles aussi variées que sophistiquées : industries du verre et des céramiques, polissage, catalyse (notamment pétrolière et automobile), fabrication d'alliages de haute technologie, d'aimants permanents, de dispositifs optiques (appareils photos et caméras notamment), de luminophores, de batteries rechargeables pour véhicules électriques ou hybrides, d'alternateurs pour éoliennes, etc.

Les TR font, par conséquent, partie des métaux dits « technologiques » dont l'approvisionnement est stratégique, mais également menacé sous l'effet de la croissance de la demande mondiale en ces métaux particuliers.

Les TR sont actuellement produites à partir de ressources conventionnelles telles que les dépôts de roches dures de bastnaésite ainsi que les dépôts alluvionnaires de monazite et de xénotime. Toutefois, d'autres ressources non conventionnelles existent telles que les minerais de phosphates (aussi appelés phosphates naturels) qui sont exploités pour la fabrication d'acide phosphorique et d'engrais phosphatés et dans lesquels la concentration des TR est, certes, plus réduite mais peut néanmoins donner lieu à une production rentable de TR.

Le traitement des minerais de phosphates en vue de la production d'acide phosphorique et d'engrais phosphatés commence par une attaque, ou lixiviation, de ces minerais, préalablement concassés et broyés, par un acide concentré, lequel est typiquement de l'acide sulfurique à 98 % qui transforme le phosphate tricalcique en acide phosphorique $H_3PO_4$ et en sulfate de calcium insoluble (ou phosphogypse). Cette attaque conduit à des solutions aqueuses d'acide phosphorique, de concentration supérieure à 4 mol/L, qui comprennent des concentrations variables de TR selon la teneur de ces dernières dans les minerais de départ et selon le procédé de traitement appliqué à ces minerais.

L'un des moyens de récupérer des TR à partir d'une solution aqueuse d'acide phosphorique issue de la lixiviation d'un minerai de phosphate par l'acide sulfurique consiste à soumettre cette solution aqueuse, après filtration et concentration, à une extraction liquide-liquide, ou extraction par solvant, laquelle consiste à mettre la solution aqueuse en contact avec une solution organique comprenant un ou plusieurs extractants dans un diluant organique ayant une affinité pour les TR de sorte à obtenir un transfert des TR dans la solution organique.

Une telle extraction doit être simultanément performante et sélective vis-à-vis des nombreux autres métaux (ci-après « impuretés métalliques ») qui sont également présents dans les solutions aqueuses d'acide phosphorique issues de la lixiviation de minerais de phosphates par l'acide sulfurique et, notamment, vis-à-vis du fer présent sous forme d'ions $Fe^{3+}$ et dont la concentration est généralement supérieure à 1 g/L dans ce type de solution.

Une étude de la littérature scientifique montre qu'un nombre réduit d'extractants a été testé pour extraire les TR d'un milieu acide phosphorique (cf. S. Wu et al., Chemical Engineering Journal 2018, 335, 774-800, ci-après référence **[1])**.

Deux grandes classes d'extractants ont été étudiées, à savoir :

- les extractants échangeurs cationiques, également dits extractants acides, qui sont principalement des composés organophosphorés, tels que des acides organophosphoriques, des acides organophosphoniques ou des acides organophosphiniques ; il s'agit, par exemple, de l'acide di-2-éthylhexylphosphorique (ou D2EHPA ou HDEHP), de l'acide di(n-octylphényl)phosphorique (ou DOPPA), de l'acide 2-éthylhexyl-2-éthylhexylphosphonique (ou HEH[EHP] ou PC88A) et de l'acide bis(triméthyl-2,4,4-pentyl)phosphinique (commercialisé sous la référence Cyanex™ 272) ; et

- les extractants solvatants, également dits extractants neutres, tels que des phosphates, des oxydes de phosphine ou des diglycolamides ; il s'agit, par exemple, du tri-n-butylphosphate (ou TBP), de l'oxyde de trioctylphosphine (ou TOPO) et du *N,N,N',N'*-tétraoctyldiglycolamide (ou TODGA).

Concernant les acides organophosphoriques, il s'avère que l'extraction des TR par ces acides est fortement dépendante de l'acidité du milieu dans lequel se trouvent les TR. Ainsi, le D2EHPA et ses analogues (DOPPA par exemple) permettent d'extraire convenablement les TR lourdes à une acidité supérieure à 4 mol/L d'acide phosphorique mais ne permettent pas d'extraire les TR légères à une telle acidité. En effet, une extraction quantitative des TR légères ne peut être obtenue qu'à une acidité inférieure à 0,5 mol/L d'acide phosphorique et, donc, au moins huit fois plus faible que celle que présentent les solutions aqueuses d'acide phosphorique issues de la lixiviation de minerais de phosphates par l'acide sulfurique.

Les acides organophosphoriques ont, de plus, comme inconvénients, de présenter une cinétique lente d'extraction et une affinité pour les métaux de transition et, notamment, pour le fer. Ainsi, l'extraction compétitive des ions $Fe^{3+}$ par le D2EHPA diminue significativement l'extraction des TR par cet extractant alors que la présence des autres impuretés métalliques telles que $Al^{3+}$, $Ca^{2+}$ ou $Mg^{2+}$ semble avoir un faible impact sur cette extraction (cf. L. Wang et al., Hydrometallurgy 2010, 101(1-2), 41-47, ci-après référence **[2]**).

Pour pallier cette mauvaise sélectivité, une première possibilité serait de réduire les ions $Fe^{3+}$ en ions $Fe^{2+}$ (qui sont très peu extraits par les acides organophosphoriques) au moyen d'un agent réducteur avant de procéder à l'extraction des TR ; néanmoins, les coûts d'une telle opération peuvent s'avérer très importants par rapport au gain économique apporté par la récupération directe et sélective des TR. Une deuxième possibilité serait l'ajout d'opérations visant à retirer le fer des solutions aqueuses d'acide phosphorique avant d'en extraire les TR, par exemple par une précipitation sélective du fer suivie d'une élimination du précipité par filtration, mais cela conduirait, d'une part, à un procédé lourd à mettre en œuvre et, donc, peu intéressant industriellement et, d'autre part, à un risque de modifications de la qualité finale de l'acide phosphorique produit.

Il est connu que l'utilisation de mélanges d'extractants comprenant, par exemple, un échangeur cationique et un échangeur solvatant, peut permettre dans certains cas d'améliorer de façon significative les performances d'une extraction liquide-liquide par rapport à celles obtenues avec l'utilisation des extractants seuls.

Toutefois, les études montrent qu'en présence d'un milieu comprenant de l'acide phosphorique, des mélanges comprenant un acide organophosphorique tel que le D2EHPA et un extractant solvatant tel que le TBP ou un oxyde de phosphine (Cyanex™ 923) ont un effet antagoniste sur l'extraction des TR dans le sens où les performances d'extraction (quantifiées par les coefficients de distribution des TR) sont inférieures à celles obtenues avec l'acide organophosphorique seul (cf. référence **[2]** précitée ; D.K. Singh et al., Desalination and Water Treatment 2012, 38(1-3), 292-300, ci-après référence **[3]).**

Les DGA représentent, quant à eux, une famille d'extractants qui a été développée par une équipe japonaise dans le cadre d'études sur le traitement de combustibles nucléaires usés dans le but de co-extraire les actinides trivalents et les lanthanides à partir d'un raffinat du procédé PUREX mais qui a également été étudiée pour le recyclage des TR à partir de rebuts de fabrication d'aimants permanents NdFeB.

Ainsi, il a été montré dans la demande internationale PCT WO 2016/046179, ci-après référence **[4],** que des DGA symétriques lipophiles à 24 atomes de carbone ou plus, tels que le TODGA, permettent de récupérer le dysprosium, le praséodyme et le néodyme à partir d'une solution aqueuse d'acide nitrique issue du traitement d'aimants permanents NdFeB, non seulement quantitativement mais également sélectivement vis-à-vis des autres éléments métalliques présents dans cette phase, en particulier vis-à-vis du fer et du bore.

Il est indiqué dans la référence **[4]** que, si la solution aqueuse dont sont extraites les TR est préférentiellement une solution d'acide nitrique, elle pourrait également être une solution d'acide sulfurique ou phosphorique. Toutefois, aucun résultat expérimental concernant une extraction par le TODGA des TR d'une solution d'acide phosphorique - dont il est connu que les ions phosphates présents dans ce type de solution sont beaucoup plus fortement complexants que les ions nitrates présents dans une solution d'acide nitrique - n'est rapporté dans cette référence.

Par contre, il a été montré dans la demande internationale PCT WO 2016/177695, ci-après référence **[5],** que l'extraction du lanthane, du néodyme, du gadolinium, du dysprosium et de l'ytterbium d'une solution aqueuse comprenant de 0,5 mol/L à 5 mol/L d'acide phosphorique par une phase organique comprenant du TODGA conduit à des pourcentages d'extraction qui sont tous inférieurs à 2%, et ce, pour toutes les concentrations d'acide phosphorique testées.

La référence **[5]** vient ainsi confirmer que les performances d'extraction obtenues lorsque le TODGA est utilisé pour extraire des TR d'une solution aqueuse d'acide nitrique ne sont pas transposables à une extraction des TR à partir d'une solution aqueuse d'acide phosphorique.

Enfin, bien qu'ils concernent le traitement de combustibles nucléaires usés et non pas l'extraction de TR de solutions aqueuse d'acide phosphorique issues de la lixiviation de minerais de phosphates par l'acide sulfurique, il convient de citer les travaux de P.K. Nayak et al. tels que rapportés, d'une part, dans J. Environ. Chem. Eng. 2013, 1(3),

559-565, ci-après référence **[6]**, et, d'autre part, *dans* Sep. Sci. Technol. 2014, 49(8), 1186-1191, ci-après référence **[7]**.

En effet, ces travaux montrent qu'un mélange d'extractants comprenant un acide organophosphorique, en l'espèce le D2EHPA, et un DGA symétrique lipophile, en l'espèce le *N*,*N*,*N*',*N*'-tétra(2-éthylhexyl)diglycolamide (ou TEHDGA) dans le n-dodécane conduit à une extraction très significative des ions $Fe^{3+}$ présents dans une solution aqueuse d'acide nitrique de haute activité. Par exemple, pour un mélange comprenant 0,25 mol/L de D2EHPA et 0,1 mol/L de TEHDGA dans le n-dodécane, le coefficient de distribution du fer est de l'ordre de 1,2 pour un essai « batch » et plus de 80% du fer présent est extrait en phase organique pour un essai en mélangeurs-décanteurs (cf. référence **[5]**).

Ils montrent de plus que, lorsque la concentration de l'acide nitrique dans une solution aqueuse comprenant de l'américium et de l'europium est supérieure à 1 mol/L, la capacité d'un mélange d'extractants comprenant du D2EHPA et du TODGA à extraire l'europium de cette solution est la même que celle obtenue avec le TODGA seul (cf. référence **[6]**).

Ces travaux permettent donc de conclure que l'utilisation d'un mélange d'extractants comprenant un acide organophosphorique et un DGA ne présente aucun intérêt par rapport à l'utilisation d'un DGA seul lorsqu'il s'agit d'extraire des TR d'une solution aqueuse d'acide nitrique comprenant du fer et/ou de concentration d'acide nitrique supérieure à 1 mol/L.

Compte-tenu de ce qui précède, il existe un réel besoin de fournir un extractant ou un mélange d'extractants qui permette d'extraire l'ensemble des TR, légères et lourdes, d'une solution aqueuse d'acide phosphorique présentant une acidité du type de celle des solutions aqueuses issues de la lixiviation de minerais de phosphates par l'acide sulfurique, et ce, à la fois efficacement et sélectivement vis-à-vis des autres métaux susceptibles d'être présents dans cette solution et, notamment, vis-à-vis du fer.

Or, dans le cadre de leurs travaux, les Inventeurs ont constaté que, de manière inattendue, un mélange d'extractants comprenant un acide organophosphorique tel que l'H2EHPA, et un diglycolamide symétrique lipophile tel que le TODGA, permet d'extraire de manière performante et sélective vis-à-vis du fer l'ensemble des TR présentes dans une solution aqueuse comprenant de l'acide phosphorique, même à une concentration d'acide supérieure à 4 mol/L.

Ils ont, de plus, constaté qu'un tel mélange d'extractants présente un effet synergique sur l'extraction des TR d'une telle solution aqueuse d'acide phosphorique puisque :

- d'une part, comme connu de l'état de la technique et vérifié par les Inventeurs (cf. exemple 2 ci-après), les acides organophosphoriques tels que le D2EHPA sont inaptes à extraire les TR légères d'un milieu aqueux comprenant plus de 4 mol/L d'acide phosphorique, et
- d'autre part, comme connu de la référence **[5]** et corroboré par les Inventeurs (cf. exemple 1 ci-après), les DGA symétriques lipophiles tels que le TOGDA ne permettent pas, quand ils sont utilisés seuls, d'extraire les terres rares d'un milieu aqueux comprenant plus de 0,5 mol/L d'acide phosphorique.

Et c'est sur ces constatations expérimentales qu'est basée l'invention.

## EXPOSÉ DE L'INVENTION

L'invention a donc pour objet l'utilisation d'un mélange comprenant :

- un premier extractant qui est un acide organophosphorique et qui répond à la formule (I) ci-après :

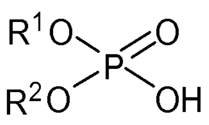
(I)

dans laquelle $R^1$ et $R^2$, identiques ou différents, représentent un groupe hydrocarboné linéaire ou ramifié, saturé ou insaturé, comprenant de 6 à 12 atomes de carbone, ou un groupe phényle éventuellement substitué par un groupe hydrocarboné linéaire ou ramifié, saturé ou insaturé, comprenant de 1 à 10 atomes de carbone ; et

- un deuxième extractant qui est un DGA symétrique lipophile et qui répond à la formule (II) ci-après :

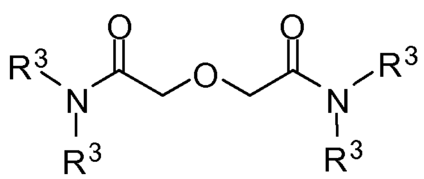
(II)

dans laquelle $R^3$ représente un groupe alkyle linéaire ou ramifié, comprenant de 6 à 12 atomes de carbone ;
pour extraire au moins une TR d'un milieu aqueux comprenant de l'acide phosphorique.

Dans ce qui précède et ce qui suit, on entend par « *groupe hydrocarboné linéaire ou ramifié, saturé ou insaturé, comprenant de 6 à 12 atomes de carbone* », tout groupe alkyle, alcényle ou alcynyle, à chaîne linéaire ou à une ou plusieurs ramifications, et comprenant au total 6, 7, 8, 9, 10, 11 ou 12 atomes de carbone.

De manière analogue, on entend par « *groupe hydrocarboné linéaire ou ramifié, saturé ou insaturé, comprenant de 1 à 10 atomes de carbone* », tout groupe alkyle, alcényle ou alcynyle, à chaîne linéaire ou à une ou plusieurs ramifications, et comprenant au total 1, 2, 3, 4, 5, 6, 7, 8, 9 ou 10 atomes de carbone.

Par ailleurs, on entend par « *groupe alkyle linéaire ou ramifié, comprenant de 6 à 12 atomes de carbone* », tout groupe alkyle, à chaîne linéaire ou à une ou plusieurs ramifications et comprenant au total 6, 7, 8, 9, 10, 11 ou 12 atomes de carbone.

Dans ce qui précède et ce qui suit, les termes « milieu aqueux », « solution aqueuse » et « phase aqueuse » sont équivalents et interchangeables tout comme les termes « solution organique » et « phase organique » sont équivalents et interchangeables.

L'expression « de ...... à ...... » entend signifier, lorsqu'elle est appliquée à une gamme de concentrations, que les bornes de cette gamme sont incluses.

Conformément à l'invention, dans la formule (I) ci-avant, $R^1$ et $R^2$, identiques ou différents, représentent préférentiellement un groupe alkyle, linéaire ou ramifié, comprenant de 6 à 12 atomes de carbone, ou un groupe phényle substitué par un groupe alkyle linéaire ou ramifié, comprenant de 1 à 10 atomes de carbone.

Plus encore, on préfère que $R^1$ et $R^2$, identiques ou différents, représentent :

- un groupe alkyle linéaire ou ramifié, comprenant de 8 à 10 atomes de carbone tel qu'un groupe n-octyle, isooctyle, n-nonyle, isononyle, n-décyle, isodécyle, 2-éthylhexyle, 2-butylhexyle, 2-méthylheptyle, 2-méthyloctyle, 1,5-diméthylhexyle, 2,4,4-triméthylpentyle, 1,2-diméthylheptyle, 2,6-diméthylheptyle, 3,5,5-triméthylhexyle, 3,7-diméthyloctyle, 2,4,6-triméthylheptyle, etc ; ou
- un groupe phényle substitué par un groupe alkyle linéaire ou ramifié, comprenant de 6 à 10 atomes de carbone tel qu'un groupe *n*-hexyle, isohexyle, *n*-heptyle, isoheptyle, *n*-octyle, isooctyle, *n*-nonyle, isononyle, *n*-décyle, isodécyle, 1-éthylpentyle, 2-éthylhexyle, 2-butylhexyle, 2-méthylheptyle, 2-éthylheptyle, 2-méthyloctyle, 2-méthylnonyle, 1,5-diméthylhexyle, 2,4,4-triméthylpentyle, 1,2-diméthylheptyle, 2,6-diméthylheptyle, 3,5,5-triméthylhexyle, 3,7-diméthyloctyle, 2,4,6-triméthylheptyle, etc.

Par ailleurs, $R^1$ et $R^2$ sont, de préférence, identiques entre eux.

Parmi les extractants de formule (I) ci-avant, toute préférence est donnée à ceux dans lesquels $R^1$ et $R^2$, identiques entre eux, représentent un groupe alkyle ramifié, comprenant de 8 à 10 atomes de carbone.

Un tel extractant est, par exemple, le D2EHPA qui répond à la formule (I) ci-avant dans laquelle $R^1$ et $R^2$ représentent un groupe 2-éthylhexyle.

Conformément à l'invention, dans la formule (II) ci-avant, $R^3$ représente, de préférence, un groupe alkyle linéaire ou ramifié, comprenant de 8 à 10 atomes de carbone tel qu'un groupe *n*-octyle, isooctyle, *n*-nonyle, isononyle, *n*-décyle, isodécyle, 2-éthylhexyle, 2-butylhexyle, 2-méthylheptyle, 2-méthyloctyle, 1,5-diméthylhexyle, 2,4,4-triméthylpentyle, 1,2-diméthylheptyle, 2,6-diméthylheptyle, 3,5,5-triméthylhexyle, 3,7-diméthyloctyle, 2,4,6-triméthylheptyle, etc.

Parmi les extractants de formule (II) ci-avant, toute préférence est donnée à ceux dans lesquels $R^3$ représente un groupe alkyle linéaire comprenant de 8 à 10 atomes de carbone.

Un tel extractant est, par exemple, le TODGA qui répond à la formule (II) ci-avant dans laquelle $R^3$ représente un groupe n-octyle.

Conformément à l'invention, le mélange d'extractants est, de préférence, un mélange de D2EHPA et de TODGA.

Par ailleurs, le mélange d'extractants est préférentiellement utilisé en solution dans un diluant organique, lequel peut être tout diluant organique apolaire dont l'utilisation a été proposée pour mettre en solution des extractants lipophiles comme un hydrocarbure ou un mélange d'hydrocarbures, aliphatiques et/ou aromatiques. À titre d'exemples d'un tel diluant, on peut citer le *n*-dodécane, le tétrapropylène hydrogéné (TPH), le kérosène et les diluants qui sont commercialisés sous les références Isane™ IP-185 (Total), l'Isane™ IP-175 (Total), Shellsol™ D90 (Shell Chemicals) et Escaid™ 110 Fluid (Exxon Mobil), préférence étant donnée à l'Isane™ IP-185.

Par ailleurs, le mélange d'extractants est, de préférence, utilisé pour extraire la TR ou les TR du milieu aqueux dans lequel elle(s) se trouve(nt) par extraction liquide-liquide, auquel cas l'utilisation de ce mélange comprend au moins une mise en contact du milieu aqueux avec une solution organique non miscible à l'eau, comprenant le mélange d'extractants dans un diluant organique, puis une séparation du milieu aqueux de la solution organique, moyennant quoi on obtient une solution organique comprenant la TR ou les TR.

La solution organique, qui est mise en contact avec le milieu aqueux, comprend typiquement de 0,2 mol/L à 2

mol/L du premier extractant et de 0,05 mol/L à 2 mol/L du deuxième extractant.

Il va de soi que le choix d'une concentration pour chacun des premier et deuxième extractants dans ces gammes sera fonction des extractants utilisés ainsi qu'éventuellement de la TR ou des TR dont on souhaitera privilégier l'extraction.

Ainsi, par exemple, pour un mélange comprenant du D2EHPA comme premier extractant et du TODGA comme deuxième extractant, la solution organique comprendra, de préférence, de 0,2 mol/L à 1,5 mol/L de D2EHPA et de 0,1 mol/L à 0,5 mol/L de TODGA.

Conformément à l'invention, l'extraction de la TR ou des TR du milieu aqueux par extraction liquide-liquide est, de préférence, suivie d'une désextraction de cette TR ou de ces TR de la solution organique dans laquelle elle(s) a (ont) été extraite(s), auquel cas cette désextraction comprend au moins une mise en contact de la solution organique avec une solution aqueuse acide ou basique, puis une séparation de la solution organique de la solution aqueuse, moyennant quoi on obtient une solution aqueuse comprenant la TR ou les TR.

Le milieu aqueux dont est (sont) extraite(s) la TR ou les TR comprend avantageusement de 0,5 mol/L à 10 mol/L, de préférence de 2 mol/L à 6 mol/L et, mieux encore, de 4 mol/L à 5 mol/L d'acide phosphorique.

Un tel milieu aqueux peut notamment être une solution aqueuse d'acide phosphorique résultant de la lixiviation d'un minerai de phosphate par l'acide sulfurique.

Une telle solution aqueuse peut contenir des TR à une concentration totale allant de 30 mg/L à 1 200 mg/L, plus précisément de 100 mg/L à 1 000 mg/L, ainsi qu'un certain nombre d'impuretés métalliques dont du fer mais aussi du magnésium, de l'aluminium, du calcium, du zinc, du chrome, du vanadium, etc.

Quoi qu'il en soit, la TR ou les TR est (sont), de préférence, choisie(s) parmi l'yttrium, le lanthane, le néodyme, le dysprosium, l'ytterbium et leurs mélanges.

D'autres caractéristiques et avantages de l'invention ressortiront du complément de description qui suit et qui se réfère aux figures annexées.

Il va de soi que ce complément de description n'est donné qu'à titre d'illustration de l'objet de l'invention et ne doit en aucun cas être interprété comme une limitation de cet objet.

## BRÈVE DESCRIPTION DES FIGURES

Les figures 1A et 1B illustrent les résultats d'essais d'extraction ayant été réalisés sur des phases aqueuses d'acide phosphorique comprenant cinq TR - à savoir de l'yttrium, du lanthane, du néodyme, du dysprosium et de l'ytterbium - ainsi que du fer, en utilisant des phases organiques comprenant 0,5 mol/L de D2EHPA et une concentration molaire variable de TODGA; la figure 1A montre l'évolution des coefficients de distribution des TR et du fer, notés $D_M$ et rapportés sur une échelle logarithmique, en fonction de la concentration molaire du TODGA, notée [TODGA], dans les phases organiques, tandis que la figure 1B montre l'évolution des facteurs de séparation entre les TR et le fer, notés $FS_{TR/Fe}$ et également rapportés sur une échelle logarithmique, en fonction de la concentration du TODGA ; à titre de comparaison, sont également indiqués sur ces figures les $D_M$ et les $FS_{TR/Fe}$ obtenus dans les mêmes conditions opératoires avec une phase organique ne comprenant que du D2EHPA comme extractant.

La figure 2 illustre les résultats d'essais d'extraction ayant été réalisés sur des phases aqueuses d'acide phosphorique comprenant les cinq TR précitées et du fer, en utilisant des phases organiques comprenant une concentration molaire variable de D2EHPA et 0,5 mol/L de TODGA ; plus spécifiquement, cette figure montre l'évolution des coefficients de distribution des TR et du fer, notés $D_M$ et rapportés sur une échelle arithmétique, en fonction de la concentration molaire du D2EHPA, notée [D2EHPA], dans les phases organiques.

La figure 3 illustre les rendements de désextraction, notés $R_M$ et exprimés en %, tels qu'obtenus lors d'essais de désextraction ayant été réalisés sur une phase organique comprenant les cinq TR précitées, du fer, 0,5 mol/L de D2EHPA et 0,25 mol/L de TODGA, en utilisant différentes phases aqueuses acides.

Les figures 4A et 4B illustrent, à titre comparatif, les résultats d'essais d'extraction ayant été réalisés sur des phases aqueuses d'acide phosphorique comprenant les cinq TR précitées et du fer, en utilisant des phases organiques ne comprenant que du D2EHPA comme extractant, à des concentrations molaires variables ; la figure 4A montre l'évolution des coefficients de distribution des TR et du fer, notés $D_M$ et rapportés sur une échelle logarithmique, en fonction de la concentration molaire du D2EHPA, notée [D2EHPA], dans les phases organiques, tandis que la figure 4B montre les facteurs de séparation entre les TR et le fer, notés $FS_{TR/Fe}$, obtenus pour une phase organique comprenant 1 mol/L de D2EHPA.

La figure 5 illustre, à titre comparatif, les résultats d'essais d'extraction ayant été réalisés sur des phases aqueuses d'acide phosphorique comprenant les cinq TR précitées et du fer, en utilisant des phases organiques comprenant 0,5 mol/L de D2EHPA et une concentration molaire variable de TBP ; plus spécifiquement, cette figure montre l'évolution des coefficients de distribution des TR et du fer, notés $D_M$ et rapportés sur une échelle arithmétique en fonction de la concentration molaire du TBP, notée [TBP], dans les phases organiques ; sont également indiqués

sur ces figures les $D_M$ obtenus dans les mêmes conditions opératoires avec une phase organique ne comprenant que du D2EHPA comme extractant.

La figure 6 illustre, à titre comparatif, les résultats d'essais d'extraction ayant été réalisés sur des phases aqueuses d'acide phosphorique comprenant les cinq TR précitées et du fer, en utilisant des phases organiques comprenant 0,5 mol/L de D2EHPA et une concentration molaire variable de TOPO ; plus spécifiquement, cette figure montre l'évolution des coefficients de distribution des TR et du fer, notés $D_M$ et rapportés sur une échelle arithmétique en fonction de la concentration molaire du TOPO, notée [TOPO], dans les phases organiques ; sont également indiqués sur cette figure les $D_M$ obtenus dans les mêmes conditions opératoires avec une phase organique ne comprenant que du D2EHPA comme extractant.

Sur les figures 3 et 4B, les barres d'erreur correspondent à une incertitude relative de 10 % qui englobe les différentes incertitudes analytiques et expérimentales.

## EXPOSÉ DÉTAILLÉ DE MODES DE MISE EN ŒUVRE PARTICULIERS

Les essais d'extraction qui sont rapportés dans les exemples qui suivent ont tous été réalisés en utilisant comme phases aqueuses, des aliquotes d'une solution aqueuse synthétique, représentative des solutions aqueuses d'acide phosphorique réellement obtenues lors de la production d'$H_3PO_4$ par lixiviation de phosphates naturels à l'$H_2SO_4$.

Cette solution aqueuse synthétique comprend, outre de l'acide phosphorique, trois TR légères, à savoir l'yttrium, le lanthane et le néodyme, deux TR lourdes, à savoir le dysprosium et l'ytterbium, et une impureté majeure et pénalisante, à savoir le fer. Elle a été préparée par dissolution des oxydes des métaux correspondants à l'état d'oxydation +3 dans une solution d'$H_3PO_4$ concentrée puis ajustement de la concentration d'$H_3PO_4$ de cette solution à 4,6 mol/L.

Sa composition massique en éléments métalliques est présentée dans le tableau I ci-après.

Tableau I

| **Éléments** | **Y** | **La** | **Nd** | **Dy** | **Yb** | **Fe** |
|---|---|---|---|---|---|---|
| **[C]** en mg/L | 216 | 195 | 173 | 204 | 267 | 1525 |

Les phases organiques ont été préparées en utilisant de l'Isane™ IP185 comme diluant organique et pré-équilibrées par contact avec une solution aqueuse comprenant 4,6 mol/L d'$H_3PO_4$.

Par ailleurs, les essais d'extraction et de désextraction qui sont rapportés dans les exemples qui suivent ont tous été réalisés en microtubes avec des volumes inférieurs à 1,5 mL, à une température de 45°C, en utilisant un ratio volumique entre les phases organiques et les phases aqueuses (O/A) égal à 1 et en soumettant ces phases à un seul contact de 20 minutes, sous agitation au moyen d'un agitateur Vibrax™. Après centrifugation, les phases organiques et aqueuses ont été séparées par décantation.

Les coefficients de distribution, les facteurs de séparation et les rendements de désextraction ont été déterminés conformément aux conventions du domaine des extractions liquide-liquide, à savoir que :

- le coefficient de distribution d'un élément métallique M, noté $D_M$, entre deux phases, respectivement organique et aqueuse, est égal à :

$$D_M = \frac{[M]_{org,f}}{[M]_{aq,f}} = \frac{[M]_{aq,i} - [M]_{aq,f}}{[M]_{aq,f}}$$

avec :

$[M]_{org,f}$ = concentration de M dans la phase organique après extraction (ou désextraction),
$[M]_{aq,f}$ = concentration de M dans la phase aqueuse après extraction (ou désextraction), et
$[M]_{aq,i}$ = concentration de M dans la phase aqueuse avant extraction (ou désextraction) ;

- le facteur de séparation entre deux éléments métalliques M1 et M2, noté $FS_{M1/M2}$, est égal à :

$$FS_{M1/M2} = \frac{D_{M1}}{D_{M2}}$$

avec :

$D_{M1}$ = coefficient de distribution de l'élément métallique M1, et
$D_{M2}$ = coefficient de distribution de l'élément métallique M2 ;

- le rendement de désextraction d'un élément métallique M, noté $R_M$, d'une phase organique est égal à :

$$R_M = \frac{[M]_{aq,f}}{[M]_{org,i}} \times 100$$

avec :

$[M]_{aq,f}$ = concentration de M dans la phase aqueuse après désextraction, et
$[M]_{org,i}$ = concentration de M dans la phase organique avant désextraction.

Les analyses multiélémentaires des phases aqueuses ou organiques comprenant les TR (solution synthétique initiale, phases aqueuses et organiques après extraction, phases aqueuses après désextraction, etc.) ont été réalisées par spectrométrie d'émission atomique dont la source est un plasma d'argon généré par couplage inductif, après dilution pour amener les éléments métalliques à des concentrations mesurables.

**EXEMPLE 1: Extraction des TR par des mélanges d'extractants D2EHPA/TODGA conformément à l'invention**

**1.1- Essais d'extraction** :

** Première série d'essais* :

Des essais d'extraction ont été réalisés en utilisant comme phases organiques, des solutions comprenant 0,5 mol/L de D2EHPA et du TODGA à une concentration de 0,1 mol/L, 0,25 mol/L, 0,5 mol/L ou 1 mol/L et, à titre de comparaison, une solution comprenant 0,5 mol/L de D2EHPA mais exempte de TODGA.

La figure 1A illustre l'évolution des coefficients de distribution des TR et du fer, $D_M$, obtenus à l'issue de ces essais en fonction de la concentration du TODGA dans les phases organiques.

Comme le montre cette figure, l'ajout de TODGA au D2EHPA se traduit par une forte augmentation des coefficients de distribution des TR et, donc, de leur extraction d'une phase aqueuse d'acide phosphorique.

Les mélanges D2EHPA/TODGA présentent une affinité particulièrement élevée pour le dysprosium, l'ytterbium et l'yttrium.

Leur affinité est sensiblement plus faible pour le lanthane et le néodyme mais reste néanmoins élevée ($D_{La}^{max}$ = 2,3) si on la compare à celle que présente le D2EHPA seul ($D_{La}$ < 0,01).

Par ailleurs, l'ajout de TODGA au D2EHPA se traduit par une baisse du coefficient de distribution du fer d'un facteur 3 par rapport à celui obtenu avec le D2EHPA seul. Ce coefficient de distribution est très faible ($D_{Fe}$ = 0,005) pour des concentrations du TODGA allant jusqu'à 0,25 mol/L, ce qui montre clairement l'excellente sélectivité pour les TR vis-à-vis du fer que présentent les mélanges D2EHPA/TODGA.

L'évolution des facteurs de séparation entre les TR et le fer, $FS_{TR/Fe}$, en fonction de la concentration du TODGA dans les phases organiques est illustrée sur la figure 1B.

Cette figure montre que les valeurs maximales de $FS_{TR/Fe}$ sont très significatives pour les TR lourdes telles que l'ytterbium ($FS_{Yb/Fe}$ > 12 500) et restent très satisfaisantes pour les TR légères telles que le lanthane ($FS_{La/Fe}$ = 460).

À titre de comparaison, le meilleur facteur de séparation entre TR et fer qui est obtenu pour le D2EHPA seul, à une concentration de 0,5 mol/L en phase organique, est le facteur de séparation entre l'ytterbium et le fer, lequel est au minimum 20 fois inférieur ($FS_{Yb/Fe} \approx 600$) à celui obtenu avec les mélanges D2EHPA/TODGA.

** Deuxième série d'essais :*

Des essais ont été réalisés en utilisant comme phases organiques, des solutions comprenant 0,5 mol/L de TODGA et du D2EHPA à une concentration de 0,1 mol/L, 0,5 mol/L, 1 mol/L ou 2 mol/L.

La figure 2 illustre l'évolution des coefficients de distribution des TR et du fer, $D_M$, obtenus à l'issue de ces essais en fonction de la concentration du D2EHPA dans les phases organiques.

Comme le montre cette figure, l'ajout de D2EHPA au TODGA se traduit par une forte augmentation des coefficients de distribution des TR et, donc, de leur extraction d'une phase aqueuse d'acide phosphorique.

Une concentration de D2EHPA supérieure à 0,1 mol/L dans le mélange est nécessaire pour obtenir de bonnes performances d'extraction pour l'ensemble des TR. À titre d'exemple, le coefficient de distribution du lanthane est très faible quand la concentration de D2EHPA dans le mélange est de 0,1 mol/L ($D_{La}$ = 0,06) mais augmente de manière très significative quand la concentration de D2EHPA dans le mélange est de 0,5 mol/L ($D_{La}$ = 2,2). À titre de comparaison, l'affinité pour le lanthane du D2EHPA seul à une concentration de 0,5 mol/L est très réduite ($D_{La}$ = 0,01).

Ces résultats corroborent ceux présentés dans la référence [5], à savoir que le TODGA seul ne permet pas d'extraire les TR d'une phase aqueuse d'acide phosphorique.

Par contre, ils montrent que l'utilisation d'une concentration de D2EHPA au moins égale à celle du TODGA et préférentiellement deux fois supérieure à celle du TODGA permet d'obtenir une bonne extraction de l'ensemble des TR.

### 1.2 - Essais de désextraction :

Des essais de désextraction ont été réalisés en utilisant :

- comme phases organiques : des aliquotes de la phase organique issue de l'essai d'extraction ayant été réalisé au point 1.1 ci-avant avec un mélange comprenant 0,5 mol/L de D2EHPA et 0,25 mol/L de TODGA ; et
- comme phases aqueuses : des solutions aqueuses comprenant :

  * soit 0,5 mol/L, 1 mol/L ou 6 mol/L d'$H_2SO_4$,
  * soit 1 mol/L d'$H_2SO_4$ et 0,125 mol/L de $Na_2SO_4$,
  * soit 5 mol/L ou 10 mol/L d'$H_3PO_4$.

La figure 3 illustre les rendements de désextraction, $R_M$, obtenus à l'issue de ces essais.

Comme le montre cette figure, des solutions aqueuses d'$H_3PO_4$ fortement concentrées (5 mol/L ou 10 mol/L) permettent de désextraire aussi le lanthane et le néodyme ainsi que le fer mais elles ne permettent pas de désextraire l'yttrium, le dysprosium et l'ytterbium qui restent en phase organique.

Des solutions aqueuses d'$H_2SO_4$ diluées (0,5 mol/L et 1 mol/L) permettent de désextraire quasi quantitativement le lanthane et le néodyme, partiellement l'yttrium, le dysprosium et l'ytterbium. Une solution à 1 mol/L d'$H_2SO_4$ permet une meilleure sélectivité de désextraction des TR vis-à-vis du fer qu'une solution à 0,5 mol/L d'$H_2SO_4$. L'ajout de $Na_2SO_4$ à hauteur de 0,125 mol/L permet d'améliorer encore cette sélectivité mais au détriment d'une baisse des rendements de désextraction de l'yttrium, du néodyme et du dysprosium.

La figure 3 montre également que le fer est partiellement mais sélectivement désextrait par une solution aqueuse comprenant 6 mol/L d'$H_2SO_4$.

On peut donc envisager la mise en œuvre d'un schéma dans lequel la phase organique issue de l'extraction des TR serait soumise à une étape de lavage par une solution aqueuse comprenant, par exemple, 6 mol/L d'$H_2SO_4$ pour éliminer sélectivement le fer présent dans cette phase organique, avant d'être soumise à une étape de désextraction des TR, par exemple au moyen d'une solution d'$H_2SO_4$ diluée, éventuellement additionnée de $Na_2SO_4$.

Les résultats obtenus pour la solution aqueuse comprenant à la fois de l'acide sulfurique et du sulfate de sodium permettent également d'envisager un schéma dans lequel les TR se trouvant en solution aqueuse après désextraction seraient récupérées par précipitation, par exemple sous la forme de sulfates doubles de TR et de sodium, de carbonates, d'oxalates, etc, ce type de précipitations étant connu de la littérature.

### EXEMPLE 2 : Extraction des TR par du D2EHPA seul (exemple comparatif)

À titre comparatif, des essais d'extraction ont été réalisés en utilisant comme phases organiques, des solutions comprenant 0,1 mol/L, 0,5 mol/L, 1 mol/L, 1,5 mol/L ou 2 mol/L de D2EHPA.

La figure 4A illustre l'évolution des coefficients de distribution des TR et du fer, $D_M$, obtenus à l'issue de ces essais en fonction de la concentration du D2EHPA dans les phases organiques.

Cette figure montre clairement que l'extraction des TR par le D2EHPA diminue avec l'augmentation du rayon ionique des TR. Ainsi, le D2EHPA présente une bonne affinité pour les TR à faible rayon ionique comme l'yttrium, le dysprosium et l'ytterbium mais ne permet pas ou quasiment pas d'extraire les TR à rayon ionique plus élevé comme le lanthane et le néodyme ($D_M$ < 0,1 quelle que soit la concentration du D2EHPA en phase organique).

Par ailleurs, les facteurs de séparation entre les TR et le fer, $FS_{TR/Fe}$, obtenus pour une concentration du D2EHPA de 1 mol/L en phase organique sont reportés sur la figure 4B. Ces facteurs de séparation sont satisfaisants pour l'ytterbium ($FS_{Yb/Fe}$ = 500). Par contre, ils ne sont pas du tout satisfaisants pour les autres TR.

Il est à noter qu'il n'est pas observé de variation significative de ces facteurs de séparation en fonction de la concentration du D2EHPA en phase organique.

**EXEMPLE 3: Extraction des TR par des mélanges D2EHPA/TBP et D2EHPA/TOPO (exemple comparatif)**

Le TODGA étant un extractant solvatant, des essais d'extraction ont été réalisés pour vérifier si des mélanges comprenant du D2EHPA et un extractant solvatant autre que le TODGA seraient susceptibles de présenter le même effet synergique que celui observé lorsque le D2EHPA est utilisé en mélange avec du TODGA.

Ces essais d'extraction ont été réalisés en utilisant comme phases organiques, des solutions comprenant 0,5 mol/L de D2EHPA et :

- soit du phosphate de tri-n-butyle (ou TBP) à une concentration de 0,1 mol/L, 0,25 mol/L ou 0,5 mol/L;
- soit de l'oxyde de trioctylphosphine (ou TOPO) à une concentration de 0,1 mol/L, 0,25 mol/L ou 0,5 mol/L.

Les résultats obtenus à l'issue de ces essais sont illustrés en termes de coefficients de distribution, $D_M$, sur la figure 5 pour les mélanges D2EHPA/TBP et sur la figure 6 pour les mélanges D2EHPA/TOPO.

Comme le montre la figure 5 l'ajout de TBP à du D2EHPA se traduit par une baisse notable des coefficients de distribution des TR et, donc, de leur extraction d'une phase aqueuse d'acide phosphorique, sauf dans le cas du lanthane et du néodyme puisque ceux-ci ne sont déjà pas extraits par le D2EHPA seul.

Cette baisse de $D_M$, qui est d'autant plus importante que la concentration du TBP en phase organique augmente, met ainsi en évidence l'existence d'un effet antagoniste de mélanges D2EHPA/TBP sur l'extraction des TR d'une solution aqueuse d'acide phosphorique.

De manière similaire, la figure 6 montre une baisse constante des coefficients de distribution des TR en fonction de la concentration du TOPO en phase organique, mettant là également l'existence d'un effet antagoniste de mélanges D2EHPA/TOPO sur l'extraction des TR d'une solution aqueuse d'acide phosphorique.

Ces résultats corroborent ceux présentés dans les références [2] et [3] précitées pour des mélanges D2EHPA/TBP et D2EHPA/TOPO, et confirment que l'utilisation d'un mélange comprenant un acide organophosphorique tel que le D2EHPA et un extractant solvatant n'a *a priori* aucun intérêt si l'on veut extraire des TR d'une solution aqueuse comprenant de l'acide phosphorique.

**RÉFÉRENCES CITÉES**

[1] S. Wu et al., Chemical Engineering Journal 2018, 335, 774-800
[2] L. Wang et al., Hydrometallurgy 2010, 101(1-2), 41-47
[3] D.K. Singh et al., Desalination and Water Treatment 2012, 38(1-3), 292-300
[4] Demande internationale PCT WO 2016/046179
[5] Demande internationale PCT WO 2016/177695
[6] P.K. Nayak et al., J. Environ. Chem. Eng. 2013, 1(3), 559-565
[7] P.K. Nayak et al., Sep. Sci. Technol. 2014, 49(8), 1186-1191


**Revendications**

**1.** Utilisation d'un mélange comprenant :

- un premier extractant de formule (I) :

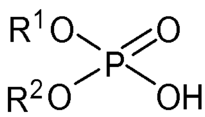

(I)

dans laquelle $R^1$ et $R^2$, identiques ou différents, représentent un groupe hydrocarboné linéaire ou ramifié, saturé ou insaturé, comprenant de 6 à 12 atomes de carbone, ou un groupe phényle éventuellement substitué par un groupe hydrocarboné linéaire ou ramifié, saturé ou insaturé, comprenant de 1 à 10 atomes de carbone ; et
- un deuxième extractant de formule (II) :

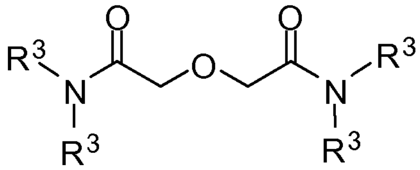

(II)

dans laquelle $R^3$ représente un groupe alkyle linéaire ou ramifié, comprenant de 6 à 12 atomes de carbone ;

pour extraire au moins une terre rare d'un milieu aqueux comprenant de l'acide phosphorique.

**2.** Utilisation selon la revendication 1, dans laquelle $R^1$ et $R^2$ représentent un groupe alkyle linéaire ou ramifié, comprenant de 6 à 12 atomes de carbone, ou un groupe phényle substitué par un groupe alkyle linéaire ou ramifié, comprenant de 1 à 10 atomes de carbone.

**3.** Utilisation selon la revendication 1 ou la revendication 2, dans laquelle $R^1$ et $R^2$ représentent un groupe alkyle linéaire ou ramifié, comprenant de 8 à 10 atomes de carbone ou un groupe phényle substitué par un groupe alkyle linéaire ou ramifié, comprenant de 6 à 10 atomes de carbone.

**4.** Utilisation selon l'une quelconque des revendications 1 à 3, dans laquelle $R^1$ et $R^2$ sont identiques entre eux.

**5.** Utilisation selon l'une quelconque des revendications 1 à 4, dans laquelle le premier extractant est l'acide di(2-éthylhexyl)phosphorique.

**6.** Utilisation selon l'une quelconque des revendications 1 à 5, dans laquelle $R^3$ représente un groupe alkyle, linéaire ou ramifié, comprenant de 8 à 10 atomes de carbone.

**7.** Utilisation selon la revendication 6, dans laquelle le deuxième extractant est le *N*,*N*,*N'*,*N'*-tétraoctyldiglycolamide.

**8.** Utilisation selon l'une quelconque des revendications 1 à 7, dans laquelle le mélange d'extractants comprend de l'acide di(2-éthylhexyl)phosphorique et du *N,N,N',N'*-tétraoctyldiglycolamide.

**9.** Utilisation selon l'une quelconque des revendications 1 à 8, dans laquelle le mélange d'extractants est utilisé en solution dans un diluant organique.

**10.** Utilisation selon l'une quelconque des revendications 1 à 9, qui comprend au moins une mise en contact du milieu aqueux avec une solution organique non miscible à l'eau, comprenant le mélange d'extractants dans un diluant organique, puis une séparation du milieu aqueux de la solution organique, moyennant quoi on obtient une solution organique comprenant au moins la terre rare.

**11.** Utilisation selon la revendication 10, dans laquelle la solution organique comprend de 0,2 mol/L à 2 mol/L du premier extractant et de 0,05 mol/L à 2 mol/L du deuxième extractant.

**12.** Utilisation selon la revendication 10 ou la revendication 11, qui comprend de plus au moins une mise en contact de la solution organique comprenant au moins la terre rare avec une solution aqueuse acide ou basique, puis une séparation de la solution organique de la solution aqueuse, moyennant quoi on obtient une solution aqueuse comprenant au moins la terre rare.

**13.** Utilisation selon l'une quelconque des revendications 1 à 12, dans laquelle le milieu aqueux comprend de 0,5 mol/L à 10 mol/L d'acide phosphorique.

**14.** Utilisation selon l'une quelconque des revendications 1 à 13, dans laquelle le milieu aqueux est une solution aqueuse d'acide phosphorique issue de la lixiviation d'un minerai de phosphate par l'acide sulfurique.

**15.** Utilisation selon l'une quelconque des revendications 1 à 14, dans laquelle la terre rare est choisie parmi l'yttrium, le lanthane, le néodyme, le dysprosium, l'ytterbium et leurs mélanges.

## Patentansprüche

1. Verwendung einer Mischung, umfassend:

- ein erstes Extraktionsmittel der Formel (I):

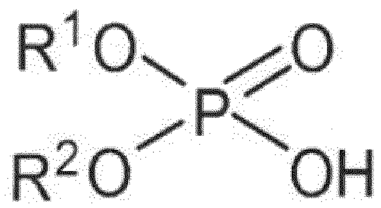

(I)

wobei $R^1$ und $R^2$, identisch oder verschieden, eine lineare oder verzweigte, gesättigte oder ungesättigte Kohlenwasserstoffgruppe darstellen, die 6 bis 12 Kohlenstoffatome umfasst, oder eine Phenylgruppe, die möglicherweise durch eine lineare oder verzweigte, gesättigte oder ungesättigte Kohlenwasserstoffgruppe substituiert ist, die 1 bis 10 Kohlenstoffatome umfasst; und
- ein zweites Extraktionsmittel der Formel (II):

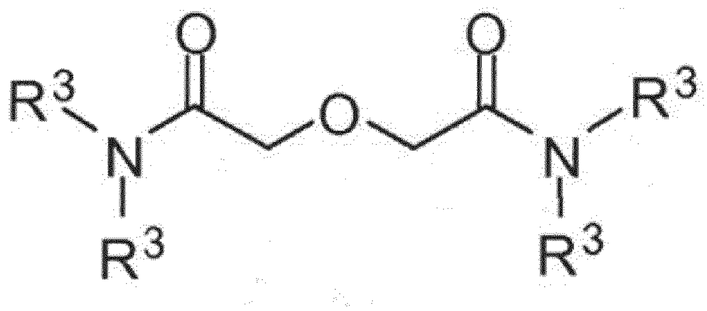

(II)

wobei $R^3$ eine lineare oder verzweigte Alkylgruppe darstellt, die 6 bis 12 Kohlenstoffatome umfasst;

zum Extrahieren mindestens eines Metalls der Seltenen Erden aus einem wässrigen Medium, das Phosphorsäure umfasst.

2. Verwendung nach Anspruch 1, wobei $R^1$ und $R^2$ eine lineare oder verzweigte Alkylgruppe darstellen, die 6 bis 12 Kohlenstoffatome umfasst, oder eine durch eine lineare oder verzweigte Alkylgruppe substituierte Phenylgruppe, die 1 bis 10 Kohlenstoffatome umfasst.

3. Verwendung nach Anspruch 1 oder Anspruch 2, wobei $R^1$ und $R^2$ eine lineare oder verzweigte Alkylgruppe darstellen, die 8 bis 10 Kohlenstoffatome umfasst, oder eine durch eine lineare oder verzweigte Alkylgruppe substituierte Phenylgruppe, die 6 bis 10 Kohlenstoffatome umfasst.

4. Verwendung nach einem der Ansprüche 1 bis 3, wobei $R^1$ und $R^2$ untereinander identisch sind.

5. Verwendung nach einem der Ansprüche 1 bis 4, wobei das erste Extraktionsmittel Bis(2-ethylhexyl)phosphat ist.

6. Verwendung nach einem der Ansprüche 1 bis 5, wobei $R^3$ eine lineare oder verzweigte Alkylgruppe darstellt, die 8 bis 10 Kohlenstoffatome umfasst.

7. Verwendung nach Anspruch 6, wobei das zweite Extraktionsmittel N,N,N',N'-Tetraoctyldiglycolamide ist.

8. Verwendung nach einem der Ansprüche 1 bis 7, wobei die Extraktionsmittelmischung Bis(2-ethylhexyl)phosphat und N,N,N',N'-Tetraoctyldiglycolamide umfasst.

9. Verwendung nach einem der Ansprüche 1 bis 8, wobei die Extraktionsmittelmischung gelöst in einem organischen

Verdünnungsmittel verwendet wird.

**10.** Verwendung nach einem der Ansprüche 1 bis 9, die mindestens eine Kontaktbildung des wässrigen Mediums mit einer mit Wasser nicht mischbaren organischen Lösung umfasst, die Extraktionsmittelmischung in einem organischen Verdünnungsmittel umfassend, und dann eine Abscheidung des wässrigen Mediums von der organischen Lösung, wodurch eine organische Lösung erhalten wird, die mindestens das Metall der Seltenen Erden umfasst.

**11.** Verwendung nach Anspruch 10, wobei die organische Lösung 0,2 mol/l bis 2 mol/l des ersten Extraktionsmittels und 0,05 mol/l bis 2 mol/l des zweiten Extraktionsmittels umfasst.

**12.** Verwendung nach Anspruch 10 oder Anspruch 11, die des Weiteren mindestens eine Kontaktbildung der organischen Lösung, die mindestens das Metall der Seltenen Erden umfasst, mit einer sauren oder basischen wässrigen Lösung umfasst, und dann eine Abscheidung der organischen Lösung von der wässrigen Lösung, wodurch eine wässrige Lösung erhalten wird, die mindestens das Metall der Seltenen Erden umfasst.

**13.** Verwendung nach einem der Ansprüche 1 bis 12, wobei das wässrige Medium 0,5 mol/l bis 10 mol/l Phosphorsäure umfasst.

**14.** Verwendung nach einem der Ansprüche 1 bis 13, wobei das wässrige Medium eine wässrige Lösung von Phosphorsäure ist, die durch das Auslaugen eines Phosphor-Minerals durch Schwefelsäure entsteht.

**15.** Verwendung nach einem der Ansprüche 1 bis 14, wobei das Metall der Seltenen Erden aus Yttrium, Lanthan, Neodym, Dysprosium, Ytterbium und deren Mischungen ausgewählt wird.

**Claims**

**1.** Use of a mixture comprising:

- a first extractant of formula (I):

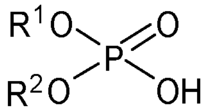 (I)

wherein $R^1$ and $R^2$, the same or different, represent a saturated or unsaturated, linear or branched hydrocarbon group, comprising from 6 to 12 carbon atoms, or a phenyl group, optionally substituted by a saturated or unsaturated, linear or branched hydrocarbon group, comprising from 1 to 10 carbon atoms; and

- a second extractant or formula (II):

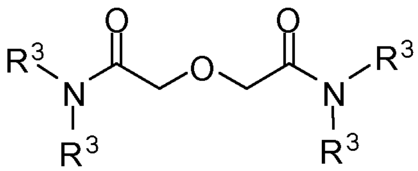 (II)

wherein $R^3$ represents a linear or branched alkyl group, comprising from 6 to 12 carbon atoms;

for extracting at least one rare earth from an aqueous medium comprising phosphoric acid.

**2.** Use according to claim 1, wherein $R^1$ and $R^2$ represent a linear or branched alkyl group, comprising from 6 to 12 carbon atoms, or a phenyl group substituted by a linear or branched alkyl group, comprising from 1 to 10 carbon atoms.

**3.** Use according to claim 1 or claim 2, wherein $R^1$ and $R^2$ represent a linear or branched alkyl group, comprising from 8 to 10 carbon atoms, or a phenyl group substituted by a linear or branched alkyl group, comprising from 6 to 10 carbon atoms.

4. Use according to any one of claims 1 to 3, wherein $R^1$ and $R^2$ are identical to each other.

5. Use according to any one of claims 1 to 4, wherein the first extractant is di(2-ethylhexyl)phosphoric acid.

6. Use according to any one of claims 1 to 5, wherein $R^3$ represents a linear or branched alkyl group, comprising from 8 to 10 carbon atoms.

7. Use according to claim 6, wherein the second extractant is *N*,*N*,*N'*,*N'*-tetraoctyldiglycolamide.

8. Use according to any one of claims 1 to 7, wherein the mixture of extractants comprises di(2-ethylhexyl)phosphoric acid and *N*,*N*,*N'*,*N'*-tetraoctyldiglycolamide.

9. Use according to any one of claims 1 to 8, wherein the mixture of extractants is used in solution in an organic diluent.

10. Use according to any one of claims 1 to 9, which comprises at least one contact of the aqueous medium with an organic solution that is not miscible with water, comprising the mixture of extractants in an organic diluent, and then a separation of the aqueous medium from the organic solution, whereby an organic solution comprising at least the rare earth is obtained.

11. Use according to claim 10, wherein the organic solution comprises from 0.2 mol/L to 2 mol/L of the first extractant and from 0.05 mol/L to 2 mol/L of the second extractant.

12. Use according to claim 10 or claim 11, which further comprises at least one contact of the organic solution comprising at least the rare earth with an acid or basic aqueous solution, and then a separation of the organic solution from the aqueous solution, whereby an aqueous solution comprising at least the rare earth is obtained.

13. Use according to any one of claims 1 to 12, wherein the aqueous medium comprises from 0.5 mol/L to 10 mol/L of phosphoric acid.

14. Use according to any one of claims 1 to 13, wherein the aqueous medium is an aqueous solution of phosphoric acid resulting from the lixiviation of a phosphate ore by sulfuric acid.

15. Use according to any one of claims 1 to 14, wherein the rare earth is chosen from yttrium, lanthanum, neodymium, dysprosium, ytterbium and mixtures thereof.

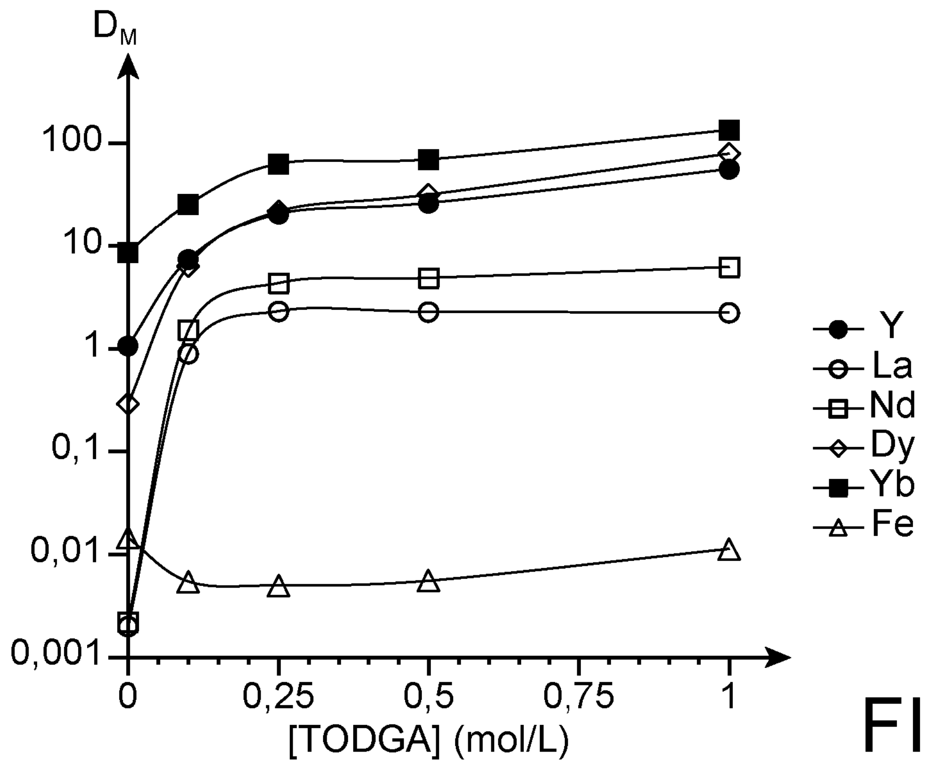
D_M
100
10
1
0,1
0,01
0,001
0
0,25
0,5
0,75
1
[TODGA] (mol/L)
Y
La
Nd
Dy
Yb
Fe

FIG. 1A

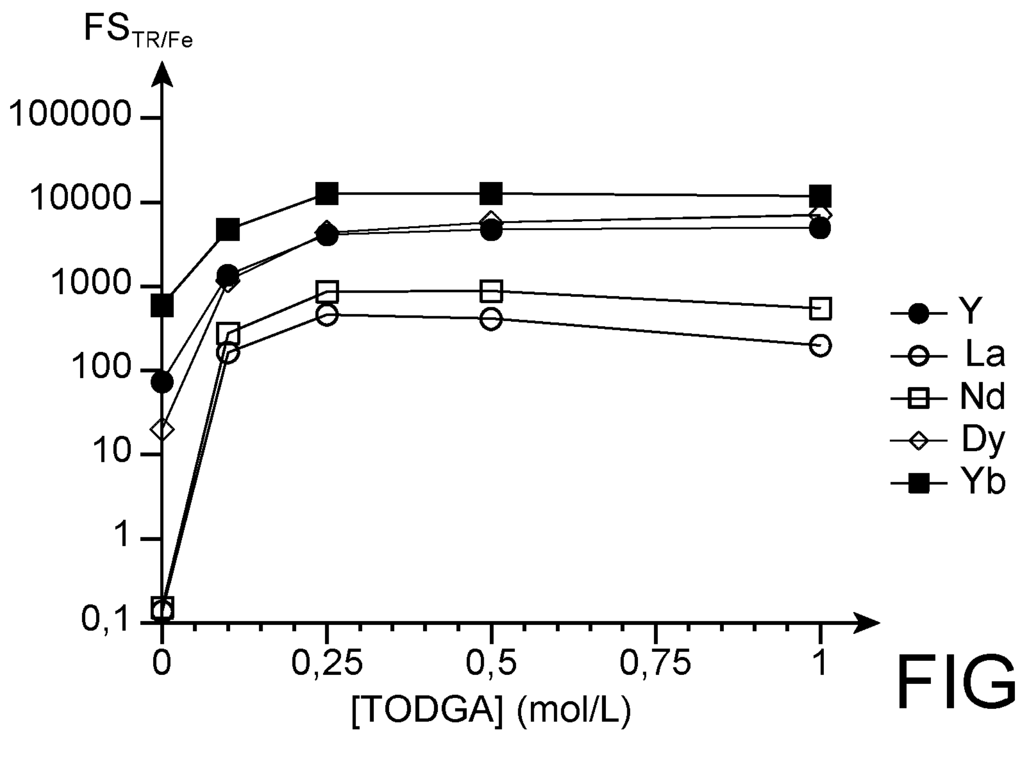
FS_TR/Fe
100000
10000
1000
100
10
1
0,1
0
0,25
0,5
0,75
1
[TODGA] (mol/L)
Y
La
Nd
Dy
Yb

FIG. 1B

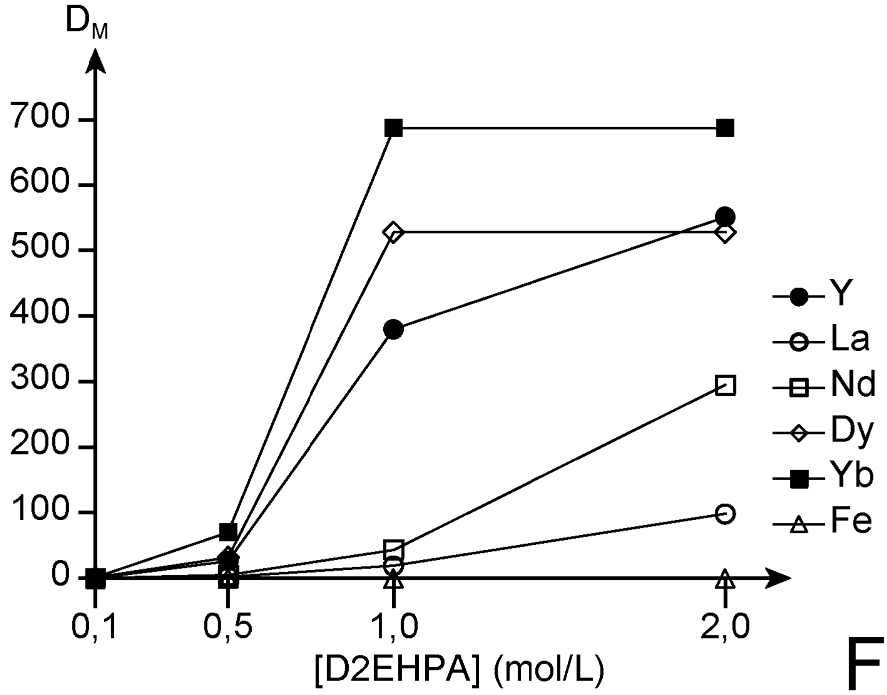
$D_M$
700
600
500
400
300
200
100
0
0,1
0,5
1,0
2,0
[D2EHPA] (mol/L)
Y
La
Nd
Dy
Yb
Fe

FIG. 2

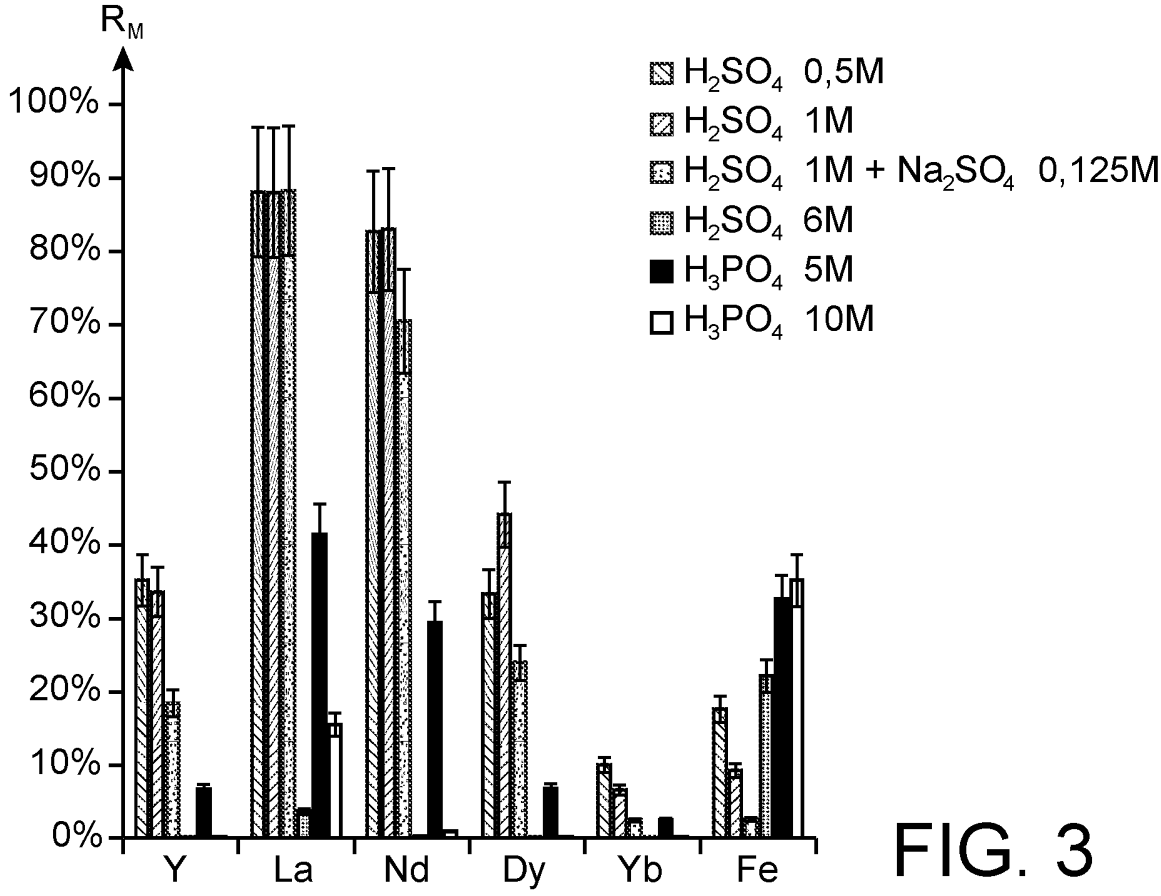
$R_M$
100%
90%
80%
70%
60%
50%
40%
30%
20%
10%
0%
Y
La
Nd
Dy
Yb
Fe
$H_2SO_4$ 0,5M
$H_2SO_4$ 1M
$H_2SO_4$ 1M + $Na_2SO_4$ 0,125M
$H_2SO_4$ 6M
$H_3PO_4$ 5M
$H_3PO_4$ 10M

FIG. 3

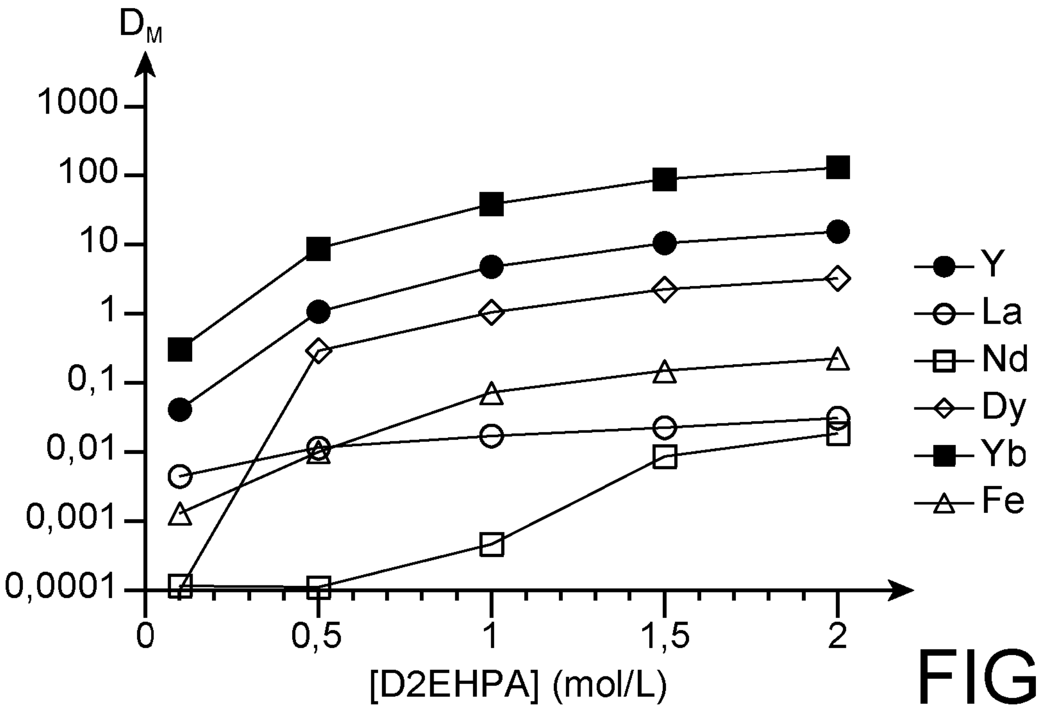
D_M
1000
100
10
1
0,1
0,01
0,001
0,0001
0
0,5
1
1,5
2
[D2EHPA] (mol/L)
Y
La
Nd
Dy
Yb
Fe

FIG. 4A

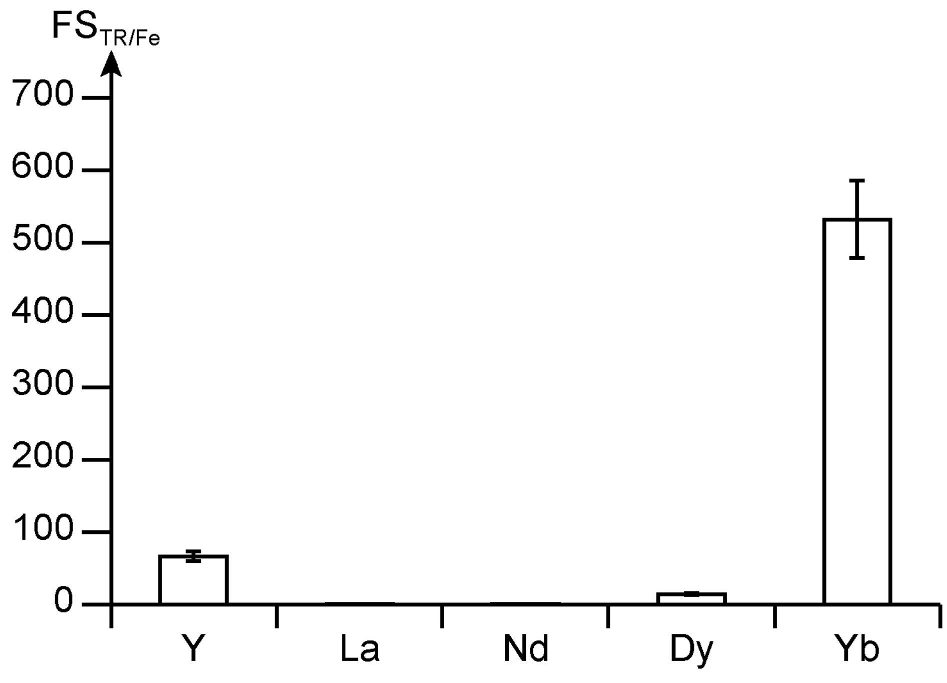
FS_TR/Fe
700
600
500
400
300
200
100
0
Y
La
Nd
Dy
Yb

FIG. 4B

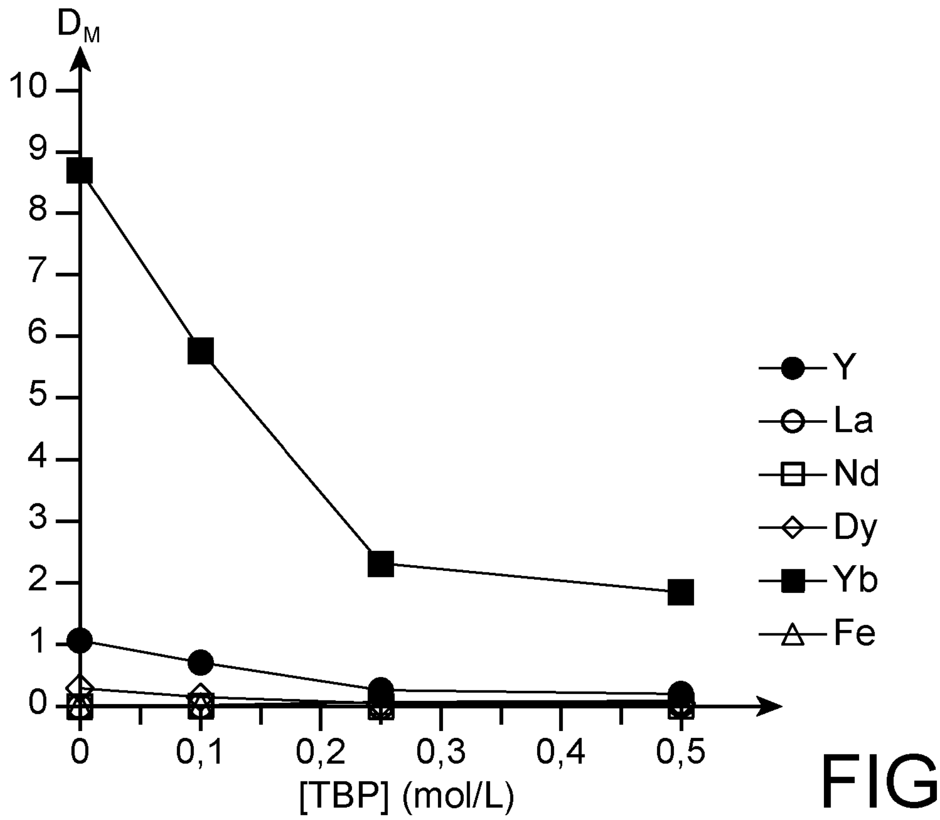
D_M
10
9
8
7
6
5
4
3
2
1
0
0
0,1
0,2
0,3
0,4
0,5
[TBP] (mol/L)
Y
La
Nd
Dy
Yb
Fe

FIG. 5

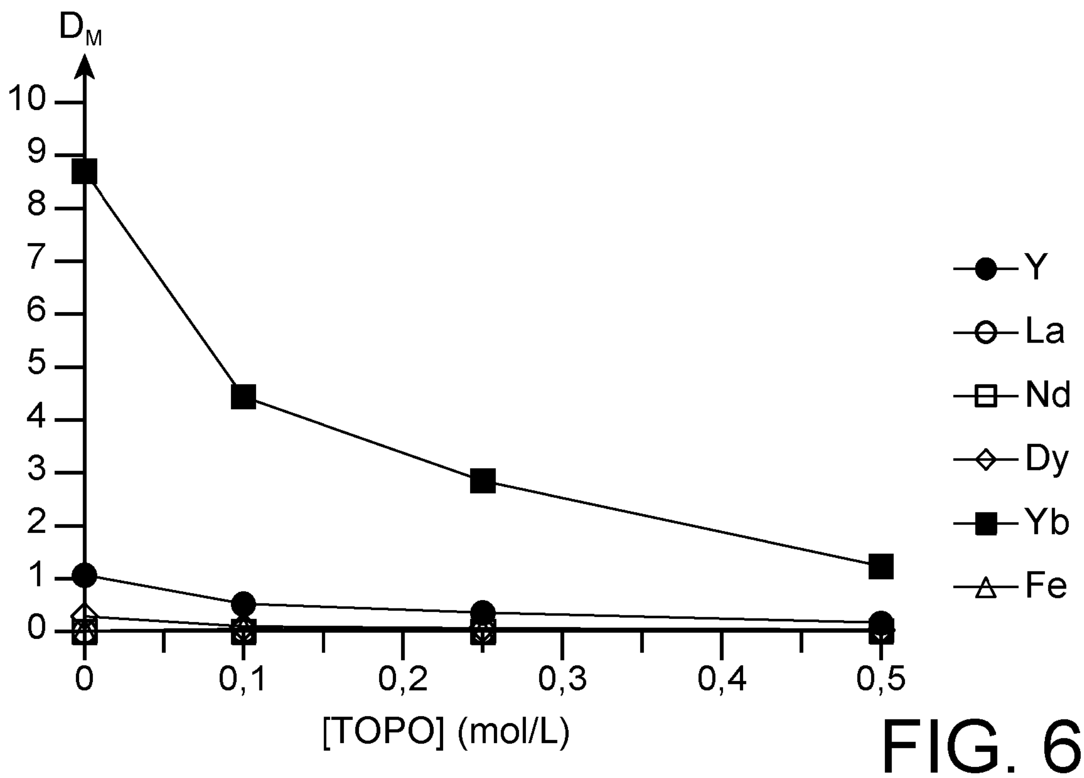
D_M
10
9
8
7
6
5
4
3
2
1
0
0
0,1
0,2
0,3
0,4
0,5
[TOPO] (mol/L)
Y
La
Nd
Dy
Yb
Fe

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2016046179 A
- WO 2016177695 A


### Littérature non-brevet citée dans la description


- **S. WU et al.** *Chemical Engineering Journal,* 2018, vol. 335, 774-800
- **L. WANG et al.** *Hydrometallurgy,* 2010, vol. 101 (1-2), 41-47
- **D.K. SINGH et al.** *Desalination and Water Treatment,* 2012, vol. 38 (1-3), 292-300
- *J. Environ. Chem. Eng.,* 2013, vol. 1 (3), 559-565
- *Sep. Sci. Technol.,* 2014, vol. 49 (8), 1186-1191
- **P.K. NAYAK et al.** *J. Environ. Chem. Eng.,* 2013, vol. 1 (3), 559-565
- **P.K. NAYAK et al.** *Sep. Sci. Technol.,* 2014, vol. 49 (8), 1186-1191